# EUROPÄISCHE PATENTSCHRIFT

(11) **EP 3 351 352 B1**
(45) Veröffentlichungstag und Bekanntmachung des Hinweises auf die Patenterteilung: **10.08.2022**
(21) Anmeldenummer: 18152523.9
(22) Anmeldetag: 19.01.2018
(51) Int. Cl.: B25J 9/00, B23K 37/04, B25J 21/00, B23Q 37/00

(54) **ARBEITSZELLE FÜR EINEN FERTIGUNGSROBOTER**
WORK CELL FOR A MANUFACTURING ROBOT
CELLULE DE TRAVAIL POUR UN ROBOT DE FABRICATION

(30) Priorität: 23.01.2017 DE 102017101203
(43) Veröffentlichungstag der Anmeldung: 25.07.2018
(73) Patentinhaber: Benteler Maschinenbau GmbH, 33602 Bielefeld (DE)
(72) Erfinder: Besik, Martin, 46833 Jenisvice (CZ); Kout, Radovan, 46014 Liberec (CZ); Malý, Jiri, 46851 Smrzovka (CZ); Masilko, Petr, 46006 Liberec (CZ); Sula, Vaclav, 46006 Liberec (CZ); Urban, Lukas, 46015 Liberec XV (CZ)
(74) Vertreter: Griepenstroh, Jörg

(56) Entgegenhaltungen:
- EP-A1- 1 598 157
- WO-A2-2007/120438
- DE-A1- 3 532 305
- US-A1- 2006 108 342
- US-A1- 2009 120 920

## Beschreibung

Die Erfindung betrifft eine Arbeitszelle für einen Fertigungsroboter gemäß den Merkmalen im Oberbegriff des Anspruchs 1.

Aus der DE 202 11 754 U1 sind modulare Schweißzellen bekannt. Die Modulbauweise bezieht sich auf Maschinenkomponenten, die in einer vorgefertigten Konfiguration nach Art eines Baukastensystems zusammengestellt und zu einer Zelle konfiguriert werden können. Diese Maschinenkomponenten sind z. B. Roboter, Bauteile- und Werkzeugablagen, Drehtische, stationäre Schweißzangen, Bearbeitungseinheiten und dergleichen. Es wird vorgeschlagen, einen modularen Anlagenboden zu verwenden, mit mehreren randseitig aneinanderstoßenden und untereinander verbundenen Bodenmodulen. Dadurch soll eine geschlossene Anlagenoberfläche bereitgestellt werden, die für Wartungsarbeiten, Bedienzwecke und andere Zwecke begehbar ist sowie eine hohe Flexibilität für die Gestaltung und den Maschinenaufbau der modularen Maschinenanlage bietet.

Durch die DE 42 12 178 A1 ist eine automatisierte Montageeinrichtung bekannt geworden, die eine flexible Montage ermöglichen soll. Der Umrüstaufwand soll dadurch gering gehalten werden, dass ein rechteckiger Grundrahmen mit einem diesem angepassten oberen Rahmen verwendet wird, wobei der Grundrahmen und der obere Rahmen mindestens an ihren Ecken durch senkrecht stehende Rungen verbunden sind, wobei innerhalb der Montagezelle ein Manipulationsroboter mit einem Greifwerkzeug angeordnet ist und die Montagezeit im Arbeitsbereich des Manipulationsroboters mindestens eine von außen bestimmbare bzw. entladbare Werkstoffzuführung und Werkstückabführung aufweist. Die Montagezelle soll in einen 20-Fuß-Container passen.

Die DE 35 32 305 A1 offenbart eine Fertigungs- und/oder Montagezelle für Werkstücke, insbesondere eine Industrieroboterzelle zum Trennen und Fügen von Werkstücken. Um die Aufstellung der Ausrüstungseinheiten eines Fertigungs- und/oder Montagearbeitsplatzes zu vereinfachen und insbesondere schneller und kostengünstiger zu machen, wird die Fertigungs- und/oder Montagezelle als transportable Baueinheit ausgebildet. Zur einfachen Be- und Entladung der Baugruppe kann das Dach eingeklappt oder abgenommen werden. Bei dem Transport können die Wandelemente eingeklappt werden.

Aus der EP 1598157 A1 ist eine weitere Bauform einer Roboterarbeitszelle mit einem eine Ausbuchtung in einer Seitenwand aufweisenden containerartigen Gehäuse bekannt. Die Wände der Ausbuchtungen können zum Transport in eine eingeschwenkte Position verlagert werden. Bei fest angeschraubten Wänden an den Ausbuchtungen können diese Wände abmontiert und in umgekehrter Position in eine Transportstellung verlagert werden, um sie für den Transport wieder zu fixieren.

Bei international agierenden Unternehmen werden derartige Arbeitszellen zu Fertigungsstraßen miteinander kombiniert und für diesen Zweck teilweise über Kontinente hinweg transportiert. Mit der Demontage, dem Transport und dem Wiederaufbau einer Arbeitszelle, die als solche eine sehr komplexe Fertigungseinheit darstellt, ist ein hoher Arbeitsaufwand verbunden. Je mehr Teile demontiert und verpackt werden müssen, desto größer ist der Aufwand auch für das Packungsmaterial. Notwendigerweise ist auch mit steigender Anzahl der Bauteile der Personalaufwand für die Montage und Demontage signifikant höher. Gerade die Deinstallation und Installation elektrischer Komponenten ist besonders zeitaufwendig. Insofern bieten modulare Vorteile zwar eine gewünscht hohe Flexibilität, allerdings wird diese Flexibilität mit einem hohen Demontage- und Montageaufwand erkauft.

Der Erfindung liegt daher die Aufgabe zugrunde, den Installationsaufwand zur Errichtung einer Arbeitszelle für einen Fertigungsroboter zu optimieren und insbesondere durch die Zeitersparnis beim Ab- und Wiederaufbau der Arbeitszelle Kosten zu sparen.

Diese Aufgabe ist bei einer Arbeitszelle mit den Merkmalen des Anspruchs 1 gelöst.

Die Unteransprüche betreffen vorteilhafte Weiterbildungen der Erfindung.

Die erfindungsgemäße Arbeitszelle für einen Fertigungsroboter umfasst in bekannter Weise ein Basismodul innerhalb der modular aufgebauten Arbeitszelle. Die Arbeitszelle besitzt Wandelemente, einen Schaltschrank und einen Zugang sowie eine zwischen Zugang und Fertigungsroboter angeordnete Zuführeinheit für Werkstücke. Der Zugang kann auch als Tor bezeichnet werden, insbesondere wenn größere Werkstücke in die Arbeitszelle transportiert werden müssen.

Erfindungsgemäß ist vorgesehen, dass während eines Transports das Basismodul mit dem Fertigungsroboter, der Schaltschrank, die Zuführeinheit und der Zugang eine zusammenhängende und elektrisch miteinander verbundene Transportbaugruppe bilden, von welcher die Wandelemente getrennt transportierbar sind.

Die erfindungsgemäße Arbeitszelle behält mithin das modulare Grundprinzip bei, jedoch mit dem entscheidenden Unterschied, dass eine Transportbaugruppe der für die Arbeitszelle wichtigsten Komponenten nicht vollständig demontiert wird. Die Transportbaugruppe umfasst nicht nur den Fertigungsroboter mit seinem Basismodul, sondern auch die elektrisch angesteuerten Komponenten. Die Steuer- und Versorgungsleitungen werden in einem Schaltschrank zusammengeführt.

Die Neuverkabelung bzw. Elektrifizierung ist im Stand der Technik zeitaufwendig, weil die Energieversorgung über eine Energiebrücke im oberen Bereich der Arbeitszelle erfolgt, wie es heute Standard ist. Die komplette Energiebrücke musste bisher von der Arbeitszelle getrennt werden mit der Folge, dass auch alle elektrischen Leitungen, die über die Energiebrücke geführt werden, von den anzusteuernden oder zu versorgenden Komponenten getrennt werden müssen. Die über die elektrischen Leitungen der Energiebrücke anzusteuernden Komponenten der Arbeitszelle umfassen wenigstens den Zugang, die Zuführeinheit und gegebenenfalls den Fertigungsroboter. Die Energiebrücke führt zum Schaltschrank.

Erfindungsgemäß ist vorgesehen, dass der Schaltschrank, die Zuführeinheit, der Zugang und die Fertigungsroboter insgesamt betrachtet eine elektrisch miteinander verbundene Transportbaugruppe bilden, ohne dass die elektrischen Verbindungen für den Transport unterbrochen werden müssen. Dadurch wird der Demontageaufwand erheblich reduziert, insbesondere, weil auch der Zugang und der Zuführeinheit mit dem Basismodul des Roboters in Verbindung bleiben. Es wird daher nicht nur der elektrische Deinstallations- und Installationsaufwand reduziert, sondern auch der Aufwand zur Demontage und Montage der mechanischen Komponenten. Im Ergebnis werden bevorzugt nur die Bauteile von der zentralen Transportbaugruppe getrennt, die nicht elektrifiziert sind bzw. die sich außerhalb der Arbeitszelle befinden. Das sind in erster Linie die Wandelemente, die aus Gründen der Arbeitssicherheit die Fertigungsroboter umgeben müssen. Zudem befindet sich außerhalb der Fertigungszelle üblicherweise eine Steuereinheit für den Fertigungsroboter bzw. die gesamte Arbeitszelle.

Bei dem Fertigungsroboter handelt es sich bevorzugt um einen Schweißroboter. In diesem Fall ist eine Schweißstromquelle erforderlich. Bei mehreren Schweißrobotern innerhalb einer Arbeitszelle sind auch mehrere Schweißstromquellen erforderlich. Diese können für den Transport zu einem kompakten Modul zusammengefasst werden. Dieses Modul kann über Steckverbindungen mit dem Schaltschrank gekoppelt sein. Der Schaltschrank ist die elektrische Schnittstelle zur Arbeitszelle, das heißt sowohl zu der Steuereinheit als auch zu etwaigen Schweißstromquellen.

Die Zuführeinheit in der Arbeitszelle hat die Funktion, das zu bearbeitende Werkstück nach dem Einbringen durch den Zugang wenigstens einem Fertigungsroboter zur Verfügung zu stellen. Die Zuführeinheit ist insbesondere ein Drehtisch oder umfasst einen Drehtisch. Der Drehtisch kann eine Trennwand aufweisen, so dass Arbeitsbereiche des Drehtisches voneinander getrennt werden können.

Die Zuführeinheit überbrückt den Zwischenraum zwischen dem Fertigungsroboter und dem Zugang. Die Zuführeinheit ist mit einem Scanner ausgestattet. Die örtliche Reihenfolge der Transportbaugruppe ist daher Zugang-Zuführeinheit-Fertigungsroboter-Schaltschrank. Daher ist vorgesehen, dass die Steuer- und Versorgungsleitungen des Zuganges durch die Zuführeinheit verlaufen, welche den Zugang mit dem Basismodul des Fertigungsroboters verbindet. Dementsprechend verlaufen die elektrischen Steuer- und Versorgungsleitungen der Zuführeinheit durch das Basismodul. Insgesamt verlaufen die jeweiligen Steuer- und Versorgungsleitungen für den Zugang, die Zuführeinheit und die Fertigungsroboter zum Schaltschrank und werden dort zentral zusammengeführt. Eine Energiebrücke ist nicht erforderlich. Der Begriff Steuer- und Versorgungsleitungen umfasst in diesem Zusammenhang auch alle Leitungen für Sensoren. Der Begriff Steuer- und Versorgungsleitung ist nicht nur auf elektrische Leitungen beschränkt, sondern kann auch Hydraulik- oder Pneumatikleitungen erfassen. Im Rahmen der Erfindung kommt es nicht darauf an, welche Funktion die einzelne Versorgungs- oder Steuerleitung hat, sondern dass der Demontageaufwand und der Montageaufwand so gering wie möglich ist. Die erfindungsgemäße Arbeitszelle ist dadurch zwar nicht so hochgradig modular, wie es im Stand der Technik beschrieben ist, allerdings in ihrer Grundkonfiguration wesentlich schneller und einfacher demontierbar und montierbar. Zudem werden Fehler bei der Montage vermieden, weil es weniger Fehlermöglichkeiten gibt.

Die Transportbaugruppe ist insbesondere so konfiguriert, dass sie in einen 20-Fuß-Container passt. Die Breite der Transportbaugruppe kann beispielsweise auf 2.280 mm begrenzt sein bei einer Höhe von 2.350 mm. Die fertig montierte Arbeitszelle mit den Außenwänden besitzt größere Abmessungen, z. B. 3.600 mm Breite bei z. B. 4.700 mm Länge.

Es wird als besonders vorteilhaft angesehen, wenn die Transportbaugruppe einen tragenden Rahmen aufweist, der bodenseitig der Transportbaugruppe angeordnet ist. Über den tragenden Rahmen werden alle Komponenten der Transportbaugruppe miteinander verbunden. Der Rahmen erstreckt sich mithin von dem wenigstens einem Basismodul des wenigstens eines Arbeitsroboters über die Zuführeinheit bis zu dem Zugang. Der Rahmen kann insbesondere von zwei parallel zueinander verlaufenden Trägern gebildet sein, zwischen denen oder an denen das wenigstens eine Basismodul und die Zuführeinheit angeordnet sind. Endseitig des Rahmens kann einerseits der Schaltschrank montiert sein und auf dem anderen Ende des Rahmens der Zugang.

Über diesen Rahmen kann die gesamte Arbeitszelle bodenseitig positioniert sein. Der Rahmen definiert exakte Abstände zwischen allen Komponenten der Transportbaugruppe, die an oder auf diesem Rahmen angeordnet sind. Es ist keine Neujustierung erforderlich und auch keine Neuverkabelung. Der Rahmen schützt die elektrischen Steuer- und Versorgungsleitungen zwischen dem Schaltschrank und den einzelnen Komponenten der Transportbaugruppe. Es entfallen sowohl zusätzliche Steckverbindungen als auch Fehlerquellen bei der Montage und Demontage. Über den Rahmen kann die komplette Arbeitszelle ausgerichtet und in der Höhe justiert und letztendlich auch gegenüber dem Untergrund verankert werden. Der Basisrahmen ist zudem die tragende Komponente der Arbeitszelle, über den die Transportbaugruppe aufgenommen und transportiert werden kann. Der bodenseitige Rahmen kann über zusätzliche Querträger ausgesteift sein. In vorteilhafter Weise bilden das Basismodul und eine Tragkonstruktion der Zuführeinheit die Querversteifungen des Rahmens. Ebenso ergeben sich endseitige Querversteifungen des Rahmens durch den Zugang an dem einen Ende bzw. den Schaltschrank an dem anderen Ende. Dadurch entsteht eine in sich ausgesteifte, gitterartige Struktur eines Basisrahmens. Der Zugang kann zudem schwenkbeweglich mit dem tragenden Rahmen verbunden sein. Seine Oberkante ist dann von einer aufrechten Betriebsposition in eine weniger hohe Transportposition absenkbar. Die Grundfläche für den Transport wird dabei nicht vergrößert, denn der Zugang kann in Richtung zur Zuführeinheit verschwenkt werden. Das Verschwenken macht es nicht erforderlich, elektrische Verbindungen zwischen dem Rahmen und dem Zugang zu trennen, weil der Zugang mit dem Rahmen verbunden bleibt. Die Transporthöhe kann bereits durch das Verschwenken um z.B. ca. 35° bei einer Ausgangshöhe von 2.700 mm auf 2.350 mm reduziert werden. Das genügt für einen Transport in einem Container.

Die Erfindung wird nachfolgend anhand eines in den Zeichnungen dargestellten Ausführungsbeispieles näher erläutert. Die Zeichnungen sind rein schematisch und nicht maßstäblich.

Es zeigen:
- Figur 1: eine erste perspektivische Ansicht einer Arbeitszelle;
- Figur 2: eine zweite perspektivische Ansicht der Arbeitszelle der Figur 1;
- Figur 3: die Arbeitszelle der Figur 1 in der Draufsicht;
- Figur 4: die Arbeitszelle der Figur 2 in der Seitenansicht bei gedrehtem Drehtisch für den Transport;
- Figur 5: die Arbeitszelle der Figur 4 in der Draufsicht;
- Figur 6: die Arbeitszelle der Figur 1 im demontierten Zustand und
- Figur 7: die Transportbaugruppe der Figur 6 mit abgeklapptem Zugang in der Seitenansicht.

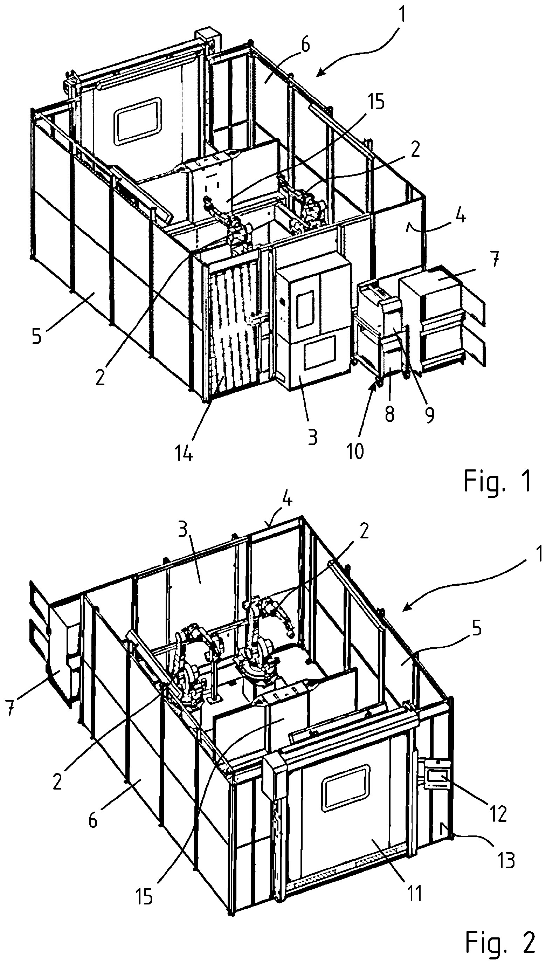

Figur 1 zeigt eine Arbeitszelle 1 mit zwei Fertigungsrobotern 2 in Form von Schweißrobotern. Mithin handelt es sich bei der Arbeitszelle 1 um eine Schweißzelle. Die Fertigungsroboter 2 sind identisch konfiguriert. Sie befinden sich nebeneinander in einer Hälfte der im Querschnitt rechteckigen Arbeitszelle 1. Figur 1 zeigt einen Schaltschrank 3 an einer schmaleren Seite 4 der rechteckigen Arbeitszelle 1. Der Schaltschrank 3 befindet sich angrenzend zu Wandelementen 5, 6, die jeweils im Bereich der längeren Seiten der Arbeitszelle 1 angeordnet sind und die Arbeitszelle 1 begrenzen. Der Schaltschrank 3 ist die elektrische Schnittstelle zwischen dem Äußeren der Arbeitszelle 1 und dem Inneren der Arbeitszelle 1. In Figur 1 ist ferner eine Steuereinheit 7 als Roboterschaltschrank zu erkennen, die sich außerhalb der Arbeitszelle 1 in der Nähe des Schaltschrankes 3 befindet. Zwischen der Steuereinheit 7 und dem Schaltschrank sind zwei Schweißstromquellen 8, 9 angeordnet. Sie sind mit dem Schaltschrank 3 verbunden. Sie sind übereinander angeordnet und bilden ein Schweißstromquellenmodul 10, das über nicht näher dargestellte Steckverbindungen mit dem Schaltschrank 3 gekoppelt ist.

Figur 2 zeigt die Arbeitszelle 1 der Figur 1 aus der gegenüberliegenden Perspektive von schräg oben. Es ist an der gegenüberliegenden Seite zum Schaltschrank 3 ein Zugang 11 in Form eines Rolltores zu erkennen. Neben dem Rolltor 11 befindet sich eine Anzeigeeinheit 12. Der Zugang 11 befindet sich an einer schmalen Seite 13 der im Grundriss rechteckigen Arbeitszelle 1. Die Wandelemente 5, 6, welche die längeren Seiten der Arbeitszelle 1 begrenzen, greifen hierbei auch teilweise um die Ecke der Arbeitszelle 1 und erstrecken sich bis zum Zugang 11. Zudem erstrecken sie sich bis zu dem Schaltschrank 3 an der gegenüberliegenden Seite 4. Dadurch wird eine komplette Einhausung gebildet. Die Arbeitszelle 1 ist über eine Tür 14 (Servicetür), die sich an der schmalen Seite 4 neben dem Schaltschrank 3 befindet, betretbar, während der Zugang 11 nur für das Einlegen/Entnehmen der Werkstücke vorgesehen ist und auch als Operatorarbeitsbereich bezeichnet werden kann Über die Tür 14 können bei Bedarf die der Tür 14 benachbarten Fertigungsroboter 2 erreicht werden. Im mittleren Bereich der Arbeitszelle 1 befindet sich ein Drehtisch 15.

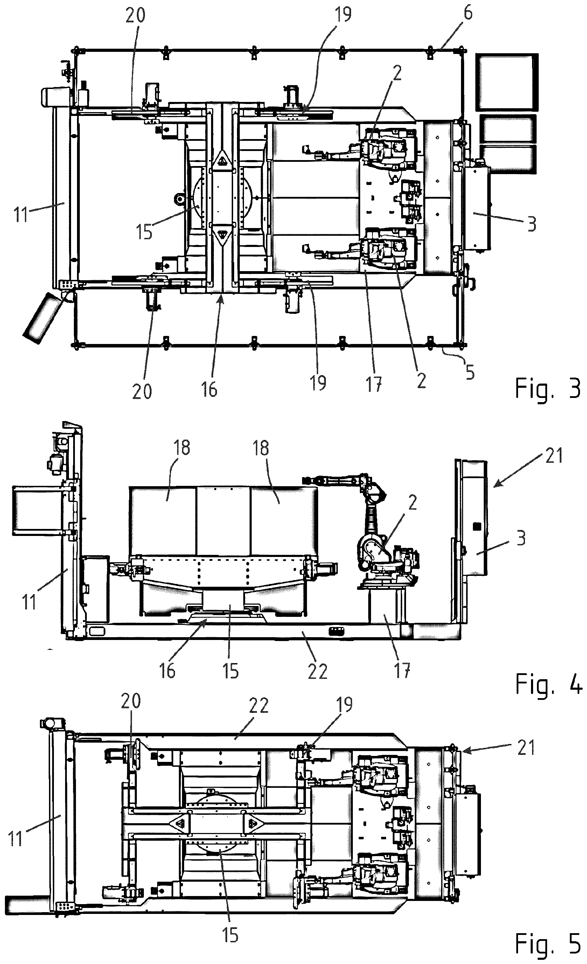

Der Drehtisch 15 ist Bestandteil einer Zuführeinheit 16, die sich zwischen dem Zugang 11 und einem Basismodul 17 der Fertigungsroboter 2 erstreckt (Figuren 3 bis 5). Die Zuführeinheit 16 nimmt daher den größten Raum innerhalb der Arbeitszelle 1 ein, wobei dies auch auf den notwendigen Freiraum für die Drehbewegung des Drehtisches 15 zurückzuführen ist. Bei dem erfindungsgemäßen Ausführungsbeispiel besitzt der Drehtisch 15 Trennwände 18 (Figur 4) und gabelförmige Werkstückaufnahmen 19, 20 auf jeder Seite der Trennwand 18.

Die Figuren 4 und 5 zeigen nach der Entfernung der Wandelemente 5, 6 (Figur 3) eine zusammenhängende und elektrisch miteinander verbundene Transportbaugruppe 21, die auf einem Rahmen 22 angeordnet ist. Dieser Rahmen 22 erstreckt sich von dem Zugang 11 in der Bildebene links bis zum Schaltschrank 3 in der Bildebene rechts. Er trägt sowohl die Fertigungsroboter 2 mit seinem Basismodul 17 als auch den Drehtisch 15 der Zuführeinheit 16.

Figur 5 zeigt die Transportbaugruppe 21 in der Draufsicht. Zum Transport befindet sich der Drehtisch 15 in einer Position, in welcher die gabelförmigen Werkzeugaufnahmen 19, 20 nicht längsseits über den Rahmen 22 vorstehen. Dadurch passt die Arbeitszelle 1 ohne die seitlichen Wände 5, 6 in einen 20-Fuß-Container. Die Transportbaugruppe 21 muss nicht weiter zerlegt werden. Insbesondere bleiben die Komponenten der Transportbaugruppe 21 elektrisch miteinander verbunden. Wesentlicher Bestandteil der Erfindung ist mithin der Rahmen 22, der sich längsseits von den Basismodulen 17 der Fertigungsroboter 2 über die Zuführeinheit 16 bis zum Zugang 11 erstreckt. Zudem ist über den Rahmen 22 auch der Schaltschrank 3 gehalten und getragen.

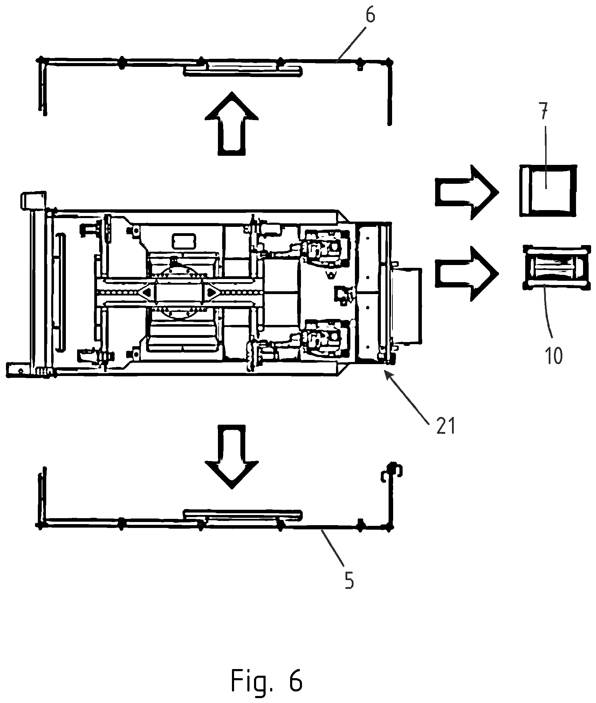

Figur 6 verdeutlicht, dass der Demontageaufwand für eine Arbeitszelle 1 ausgesprochen gering ist. Zur Demontage werden von der zentralen Transportbaugruppe 21, wie sie in den Figuren 4 und 5 dargestellt ist, lediglich die seitlichen Wände 5, 6 getrennt, die mechanisch einfach gelöst werden können. Zudem wird die außerhalb der Arbeitszelle angeordnete Steuereinheit 7 von der Transportbaugruppe 21 getrennt sowie das Schweißstromquellenmodul 10, das separat transportiert werden kann.

Es ist erkennbar, dass die Demontage wesentlich schneller erfolgen kann, als die zentrale Transportbaugruppe 21 in ihre Einzelteile zu zerlegen, insbesondere den Zugang 11 von der Zuführeinheit 16 und von den Fertigungsrobotern 2 mechanisch und elektrisch zu trennen. Auch wenn die mechanische Trennung einfach möglich ist, sind für die Wiederinbetriebnahme sorgfältige Kontrollen aller elektrischen Verbindungen erforderlich. Bei der erfindungsgemäßen Arbeitszelle 1 ist zwar auch eine Kontrolle erforderlich, jedoch sind das Fehler- und Ausfallrisiko geringer. Die Arbeitszelle 1 ist rasch wieder einsetzbar.

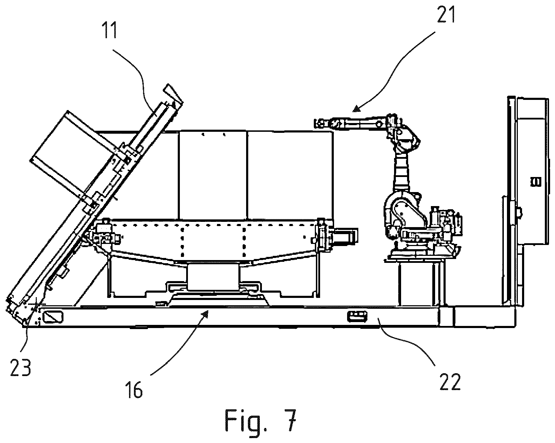

Figur 7 zeigt die Transportbaugruppe 21 in einer Seitenansicht. Im Unterschied zu der Figur 6 ist der Zugang 11 nicht senkrecht angeordnet, wie es für den Betrieb notwendig ist (Betriebsposition), sondern schräg. Er befindet sich in einer Transportposition. Der Zugang 11 ist um ca. 35° aus der Vertikalen in Richtung zur Zuführeinheit 16 verschwenkt. Er übergreift die Zuführeinheit 16 oberseitig und teilweise auch längsseitig. Es handelt sich bei den überlappenden Komponenten um die Zarge oder den Rahmen des Zugangs 11, während der Zugang 11 im Übrigen offen ist, damit die Baugruppen des Zuganges 11 und der Zuführeinheit 16 Bauraum sparend ineinandergreifen können. Eine Schwenkachse 23, um welche der Zugang 11 verschwenkt werden kann, befindet sich unmittelbar oberhalb des Rahmens 22 bzw. seiner Längsträger, mit welchem der Zugang 11 in der Betriebsposition verschraubt ist.

## Patentansprüche

1. Arbeitszelle für einen Fertigungsroboter (2), der auf einem Basismodul (17) innerhalb der modular aufgebauten Arbeitszelle (1) angeordnet ist, wobei die Arbeitszelle (1) Wandelemente (5, 6), einen Schaltschrank (3) und einen Zugang (11) aufweist, sowie eine zwischen Zugang (11) und Fertigungsroboter (2) angeordnete Zuführeinheit (16) für Werkstücke, wobei während eines Transports das Basismodul (17) des wenigstens eines Fertigungsroboters (2), der Schaltschrank (3), die Zuführeinheit (16) und der Zugang (11) eine mechanisch zusammenhängende und elektrisch miteinander verbundene Transportbaugruppe (21) bilden, **dadurch gekennzeichnet, dass** die Wandelemente (5, 6) für den Transport von der elektrisch miteinander verbundenen Transportgruppe (21) getrennt sind, wobei wenigstens eine Steuereinheit (7) für den wenigstens einen Fertigungsroboter (2) außerhalb der Arbeitszelle (1) angeordnet ist und zum Transport von der Transportbaugruppe (21) entkoppelt ist.

2. Arbeitszelle nach Anspruch 1, **dadurch gekennzeichnet, dass** der mindestens ein Fertigungsroboter (2) ein Schweißroboter ist.

3. Arbeitszellen nach Anspruch 1 oder 2, **dadurch gekennzeichnet, dass** elektrische Verbindungen zwischen den genannten Komponenten der zusammenhängenden Transportbaugruppe (21) während eines Transports in einem gekoppelten Zustand sind.

4. Arbeitszelle nach Anspruch 2 oder 3, **dadurch gekennzeichnet, dass** für mehrere Schweißroboter (2) mehrere Schweißstromquellen (8, 9) zu einem Schweißstromquellenmodul (10) zusammengefasst, wobei das Schweißstromquellenmodul (10) über Steckverbindungen mit der Transportbaugruppe (21) gekoppelt ist.

5. Arbeitszelle nach einem der Ansprüche 1 bis 4, **dadurch gekennzeichnet, dass** die Zuführeinheit (16) einen Drehtisch (15) umfasst.

6. Arbeitszelle nach Anspruch 5, **dadurch gekennzeichnet, dass** elektrische Steuer- und Versorgungsleitungen des Zuganges (11) durch die Zuführeinheit (16) verlaufen.

7. Arbeitszelle nach einem der Ansprüche 1 bis 6, **dadurch gekennzeichnet, dass** elektrische Steuer- und Versorgungsleitungen der Zuführeinheit (16) durch das wenigstens eine Basismodul (17) verlaufen.

8. Arbeitszelle nach Anspruch 6 oder 7, **dadurch gekennzeichnet, dass** die jeweiligen Steuer- und Versorgungsleitungen für den Zugang (11), für die Zuführeinheit (16) und diejenigen für die Fertigungsroboter (2) in dem Schaltschrank (3) zusammengeführt ist.

9. Arbeitszelle nach einem der Ansprüche 1 bis 8, **dadurch gekennzeichnet, dass** der Schaltschrank (3) auf einer Seite (4) der Arbeitszelle (1) angeordnet ist und der Zugang (11) auf der gegenüber liegenden Seite (13) der Arbeitszelle (1), wobei die Wandelemente (5, 6) den Bereich zwischen den beiden Seiten (4, 13) überbrücken.

10. Arbeitszelle nach einem der Ansprüche 1 bis 9, **dadurch gekennzeichnet, dass** die Transportbaugruppe (21) einen tragenden Rahmen (22) aufweist, der bodenseitig der Transportbaugruppe (21) angeordnet ist.

11. Arbeitszelle nach Anspruch 10, **dadurch gekennzeichnet, dass** sich der Rahmen (22) von dem wenigstens einen Basismodul (17) über die Zuführeinheit (16) bis zu dem Zugang (11) erstreckt.

12. Arbeitszelle nach Anspruch 10 oder 11, **dadurch gekennzeichnet, dass** der Rahmen (22) zwei parallel zueinander verlaufende Träger aufweist, zwischen denen das wenigstens eine Basismodul (17) und die Zuführeinheit (16) angeordnet sind.

13. Arbeitszelle nach einem der Ansprüche 10 bis 12, **dadurch gekennzeichnet, dass** der Zugang (11) schwenkbeweglich mit dem tragenden Rahmen (22) verbunden ist und für den Transport von einer aufrechten Betriebsposition in eine in Richtung zur Zuführeinheit (16) abgesenkten Transportposition absenkbar ist.

## Claims

1. Work cell for a production robot (2) which is arranged on a base module (17) inside the modular work cell (1), wherein the work cell (1) has wall elements (5, 6), a control cabinet (3) and an access (11), as well as a feed unit (16) for workpieces which is arranged between the access (11) and the production robot (2), wherein during transport the base module (17) of the at least one production robot (2), the control cabinet (3), the feed unit (16) and the access (11) form a mechanically connected and electrically interconnected transport assembly (21), **characterised in that** the wall elements (5, 6) are separated from the electrically interconnected transport assembly (21) for transport, wherein at least one controller (7) for the at least one production robot (2) is arranged outside the work cell (1) and is decoupled from the transport assembly (21) for transport.

2. Work cell according to claim 1, **characterised in that** the at least one production robot (2) is a welding robot.

3. Work cells according to claim 1 or 2, **characterised in that** electrical connections between said components of the interconnected transport assembly (21) are in a coupled state during transport.

4. Work cell according to claim 2 or 3, **characterised in that**, for a plurality of welding robots (2), a plurality of welding power sources (8, 9) are combined to form a welding power source module (10), wherein the welding power source module (10) is coupled to the transport assembly (21) via plug-in connections.

5. Work cell according to any of claims 1 to 4, **characterised in that** the feed unit (16) comprises a turntable (15).

6. Work cell according to claim 5, **characterised in that** electrical control and supply lines for the access (11) run through the feed unit (16).

7. Work cell according to any of claims 1 to 6, **characterised in that** electrical control and supply lines for the feed unit (16) run through the at least one base module (17).

8. Work cell according to claim 6 or 7, **characterised in that** the respective control and supply lines for the access (11), for the feed unit (16) and those for the production robots (2) are brought together in the control cabinet (3).

9. Work cell according to any of claims 1 to 8, **characterised in that** the control cabinet (3) is arranged on one side (4) of the work cell (1) and the access (11) is arranged on the opposite side (13) of the work cell (1), wherein the wall elements (5, 6) bridge the area between the two sides (4, 13).

10. Work cell according to any of claims 1 to 9, **characterised in that** the transport assembly (21) has a supporting frame (22) arranged on the bottom side of the transport assembly (21).

11. Work cell according to claim 10, **characterised in that** the frame (22) extends from the at least one base module (17) via the feed unit (16) to the access (11).

12. Work cell according to claim 10 or 11, **characterised in that** the frame (22) has two mutually parallel beams between which the at least one base module (17) and the feed unit (16) are arranged.

13. Work cell according to any of claims 10 to 12, **characterised in that** the access (11) is pivotally connected to the supporting frame (22) and for transport can be lowered from an upright operating position into a transport position in which said access is lowered in the direction of the feed unit (16).

## Revendications

1. Cellule de travail pour un robot de fabrication (2) qui est agencé sur un module de base (17) à l'intérieur de la cellule de travail (1) constituée de manière modulaire, dans laquelle la cellule de travail (1) présente des éléments de paroi (5, 6), une armoire de commutation (3) et un accès (11), ainsi qu'une unité de fourniture (16) agencée entre l'accès (11) et le robot de fabrication (2) pour des pièces à usiner, dans laquelle pendant un transport le module de base (17) d'au moins un robot de fabrication (2), l'armoire de commutation (3), l'unité de fourniture (16) et l'accès (11) forment un bloc de transport (21) relié électriquement entre eux et communiquant mécaniquement, **caractérisée en ce que** les éléments de paroi (5, 6) sont séparés pour le transport du bloc de transport (21) relié entre eux électriquement, dans laquelle au moins un dispositif de commande (7) est agencé pour l'au moins un robot de fabrication (2) en dehors de la cellule de travail et est découplé pour le transport du bloc de transport (21).

2. Cellule de travail selon la revendication 1, **caractérisée en ce que** l'au moins un robot de fabrication (2) est un robot de soudage.

3. Cellule de travail selon la revendication 1 ou 2, **caractérisée en ce que** des liaisons électriques entre les composants cités du bloc de transport (21) interconnectés pendant un transport sont dans un état couplé.

4. Cellule de travail selon la revendication 2 ou 3, **caractérisée en ce que** pour plusieurs robots de soudure (2), plusieurs sources de courant de soudure (8, 9) sont réunies en un module de source de courant de soudure (10), dans laquelle le module de source de courant de soudure (10) est couplé par le biais des liaisons d'enfichage au bloc de transport (21).

5. Cellule de travail selon l'une quelconque des revendications 1 à 4, **caractérisée en ce que** l'unité de fourniture (16) comporte une table rotative (15).

6. Cellule de travail selon la revendication 5, **caractérisée en ce que** des conduites de commande et d'alimentation électriques de l'accès (11) s'étendent à travers l'unité de fourniture (16).

7. Cellule de travail selon l'une quelconque des revendications 1 à 6, **caractérisée en ce que** des conduites de commande et d'alimentation électriques de l'unité de fourniture (16) s'étendent à travers l'au moins un module de base (17).

8. Cellule de travail selon la revendication 6 ou 7, **caractérisée en ce que** les conduites de commande et d'alimentation respectives pour l'accès (11), pour l'unité de fourniture (16) et celles pour les robots de fabrication (2) sont réunies dans l'armoire de commutation (3).

9. Cellule de travail selon l'une quelconque des revendications 1 à 8, **caractérisée en ce que** l'armoire de commutation (3) est agencée sur un côté (4) de la cellule de travail (1) et l'accès (11) sur le côté opposé (13) de la cellule de travail (1), dans laquelle les éléments de paroi (5, 6) recouvrent l'étendue entre les deux côtés (4, 13).

10. Cellule de travail selon l'une quelconque des revendications 1 à 9, **caractérisée en ce que** le bloc de transport (21) présente un cadre (22) porteur qui est agencé côté fond du bloc de transport (21).

11. Cellule de travail selon la revendication 10, **caractérisée en ce que** le cadre (22) s'étend de l'au moins un module de base (17) par le biais de l'unité de fourniture (16) jusqu'à l'accès (11).

12. Cellule de travail selon la revendication 10 ou 11, **caractérisée en ce que** le cadre (22) présente deux supports s'étendant parallèlement l'un à l'autre, entre lesquels l'au moins un module de base (17) et l'unité de fourniture (16) sont agencés.

13. Cellule de travail selon l'une quelconque des revendications 10 à 12, **caractérisée en ce que** l'accès (11) est relié de manière mobile en pivotement au cadre (22) porteur et peut être abaissé pour le transport d'une position de fonctionnement droite dans une position de transport abaissée en direction de l'unité de fourniture (16).
